(19)

Europäisches
Patentamt
European
Patent Office
Office européen
des brevets

(11) **EP 1 923 838 A1**

(12) **EUROPEAN PATENT APPLICATION**

(43) Date of publication:
**21.05.2008 Bulletin 2008/21**

(51) Int Cl.:
***G06T 15/50*** (2006.01)

(21) Application number: **07117212.6**

(22) Date of filing: **26.09.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (71) Applicant: **Agfa HealthCare NV**<br>**2640 Mortsel (BE)**<br><br>(72) Inventor: **Koole, Michel**<br>**2640 Mortsel (BE)** |
| (30) Priority: **20.11.2006 EP 06124365** | |

(54) **Method of fusing digital images**

(57) A method of fusing two volume representations wherein the fused information is composed by blending the information of datasets corresponding with the volume representations by means of a blending function with a blending weight that is adjusted locally and/or dynamically on the basis of the information of either of the datasets.

Fig. 1    a    b

          d    c

EP 1 923 838 A1

**Description**

FIELD OF THE INVENTION

The present invention relates to medical imaging. More particularly the present invention relates to fusion of medical digital images and to visualization of volume-volume fusion.

BACKGROUND OF THE INVENTION

The invention relates to the fusion of at least two digital images of an object, the first image of which favours a particular constituent of the object, while the second favours another.

Such a technique has a particular important application in the medical field in which a first image of a body organ obtained by CT (Computerized Tomography) is fused with a second image of the same organ obtained by magnetic resonance imaging (MRI). In fact, the CT image particularly reveals the bony part. In such an image the bony part is white and all other parts, especially the soft tissues are a homogeneous gray without contrast. On the other hand, the MRI Image reveals soft tissues in different shades of gray levels and the other parts like the bony structure and empty space are black.

Another example where it is often desirable to combine medical images is fusion between positron emission tomography (PET) and computed tomography (CT) volumes. The PET measures the functional aspect of the examination, typically the amount of metabolic activity. The CT indicates the X-ray absorption of the underlying tissue and therefore shows the anatomic structure of the patient. The PET typically looks somewhat like a noisy and low-resolution version of the CT. However what the user is usually most interested in seeing the high intensity values from the PET and seeing where these are located within the underlying anatomical structure that is clearly visible in the CT.

In general, in the medical field, two two-dimensional digital images from different types of image acquisition devices (e.g. scanner types) are combined into a new composite image using the following typical approaches in fusion:

1) Checker board pattern:

The composite image is divided into sub-regions, usually rectangles. If one sub-region is taken from one dataset, the next sub-region is taken from the other dataset, and so on. By looking at the boundaries between the sub-regions, the user can evaluate the accuracy of the match.

2) Image blending:

Each pixel in the composite image is created as a weighted sum of the pixels from the individual images. The user evaluates the registration by varying the weights and seeing how the features shift when going from only the first image to viewing the blended image, to viewing only the second image.

3) Pixel Replacement:

The composite image is initially a copy of one of the input images. A set of possibly non-contiguous pixels is selected from the other image and inserted into the composite image. Typically the selection of the set of replacement pixels is done using intensity thresholding. The user evaluates the registration by varying the threshold.

When the datasets represent three-dimensional volumes, the typical approaches to visualization are MPR-MPR (Multi-Planar Reformat) fusion which involves taking a MPR-plane through one volume and the corresponding plane through the other volume and using one of the two-dimensional methods described above.

Another approach involves a projector for creating a projection of both volumes (MIP - Maximum intensity projection, MinIP - Minimum Intensity projection) and again using one of the two-dimensional methods described above to create a composite image.

A major drawback of the previously described composite techniques is the fact that the techniques are an "all or nothing" approach.

For the checker board pattern, all pixels in a certain sub-region are taken from one of the two datasets, neglecting the pixel information in the other dataset. The same remark is valid for pixel replacement. While image blending tries to incorporate pixel information of both datasets, all pixels in the composite image are created however using the same weight for the whole dataset.

In 'Multi-modal Volume Visualization using Object-Oriented Methods' by Zuiderveld and Viergever, Proceedings Symposium on Volume Visualization, October 17, 1994; an object-oriented architecture aimed at integrated visualization of volumetric datasets from different modalities is described. The rendering of an individual image is based on tissue specific shading pipelines.

In 'Visualizing inner structures in multimodal volume data" by Manssour I H et al., Computer Graphics and Image Processing, 2002 fusion of two data sets from multimodal volumes for simultaneous display of the two data sets is described.

In European patent application EP 1 489 591 a system and method for processing images utilizing varied feature class weights is provided. A computer system associates two or more image with a set of feature class data such as color and texture data. The computer assigns a set of processing weights for each of the feature classes. The two or more images are blended according to the feature class weights. For example pixel display attributes are expressed in an Lab color model. The weights applied to each of the L, a, and b components (also called channel) may be different. The individual weights may be pre-assigned or according to the content being rendered. The weights are identical for each value within a channel.

Given the importance of providing useful visualization information, it would be desirable and highly advantageous to provide a new technique for visualization of a volume-volume fusion that overcomes the drawbacks of the prior art.

SUMMARY OF THE INVENTION

The above-mentioned aspects are realized by a method having the specific features set out in claim 1.

Specific features for preferred embodiments of the invention are set out in the dependent claims.

According to the present invention image representations are blended by using a blending function with a blending weight. This blending weight is determined locally and dynamically in dependence on the local image information in a data set of at least one of the images that are blended. The blended image can then be visualized on a display device such as a monitor.

The blending weight can be adapted locally and/or dynamically based on the information present in the datasets of the images. This information may comprise:

- raw voxel or pixel values of the datasets,
- processed voxel or pixel values of the datasets,
- segmentation masks of the datasets,
- extracted features from the datasets.

Pixel/voxel values can for example be filtered with a low pass filter to reduce the influence of noise on the blending weights.

Segmentation masks can for example be generated interactively by means of region growing, selecting a seed point and a range of pixel values. However, automatic segmentation techniques can also be used.

The curvature or gradient present (extracted features)in a pixel/voxel is in a specific embodiment used to determine the blending weight locally.

In a specific embodiment a so-called reformatter can be used. The function of the reformatter is to create corresponding planes through the volume representations of either of the images.

A blended plane is then composed according to this invention by blending corresponding planed using a blending function with locally and/or dynamically blended weights.

In another specific embodiment a projector can be used. The function of the projector is to create corresponding projections (MIP, Min-IP) of both volume representations of either of the images.

A blended projection is then composed according to this invention by blending corresponding planed using a blending function with locally and/or dynamically blended weights.

In still an alternative embodiment a volume renderer is used to compose a rendered blended volume using a locally and/or dynamically adjusted weight function.

Pixels/voxels may be weighted differently during blending according to their values in one of or both the datasets.

The blending weight may dependent on the voxel/pixel values by means of given thresholds.

For example, only pixels/voxels with values within or outside a given range are blended.

In one embodiment the blending weight is 0 (never present in the blended image) for pixels/voxels with values within a given range for the dataset pertaining to one image and a given range for the other dataset.

For example, the blending weight is 1 (always present in the blended image) for pixels/voxels with values within the given range for one dataset and within the given range for the other dataset.

A blending function for each pixel/voxel i could for example be:

$$b_i = \alpha \cdot v_{1i} \cdot c_{1i} + (1-\alpha) \cdot v_{2i} \cdot c_{2i}$$

where $b_i$ is the value of the blended pixel/voxel, $v_{1i}$ and $v_{2i}$ are the pixel/voxel values in respectively volume 1 and 2, and $\alpha$ is the blending factor.

$c_{1i}$ is 1 if $v_{1i}$ is inside a specified range $min_1 \leq v_1 \leq max_1$, and 0 otherwise.

$c_{2i}$ is 1 if $v_{2i}$ is inside a specified range $min_2 \leq v_2 \leq max_2$, and 0 otherwise.

A variant of the blending mentioned above, is the following:

$b_i = \alpha \cdot v_{1i} \cdot c_{1i} + (1-\alpha) \cdot v_{2i} \cdot v_{2i} + (1-c_{1i}) \cdot z_1 + (1-c_{2i}) \cdot z_2$ where $z_1$ and $z_2$ are the values that should be given to pixels/voxels i when its value is outside the given range.

In an alternative embodiment the blending weight is dependent of segmentation masks determined for both datasets.

For example, the blending weight is set to zero for pixels/voxels that belong to a given segmentation mask created for one of the datasets.

The blending weight can also be set to 1 for pixels/voxels that belong to a given segmentation mask created for one of the datasets.

The weighting function can be edited manually.

The method of the present invention can be implemented as a computer program product adapted to carry out the steps of any of the method.

The computer executable program code adapted to carry out the steps of he method is commonly stored on a computer readable medium such as a CD-ROM or DVD or the like.

Further advantages and embodiments of the present invention will become apparent from the following description and drawings.

BRIEF DESCRIPTION OF THE DRAWINGS

Figure 1

(a) is a CT image with clear demarcation of the bone of the skull,
(b) is a MR image with clear rendering of the brain tissue,
(c) is a coronally fused image,
(d) is an axial image wherein the bone structure of the CT image is superposed on the MR image by means of the 'smart blending' method of the present invention.

DETAILED DESCRIPTION OF THE INVENTION

The present invention provides a technique for combining various types of diagnostic images to allow the user to view more useful information for diagnosis. It can be used for fused visualization of two-dimensional diagnostic images or three-dimensional volumes.
For the visualization of volume-volume fusion, it can be combined with the reformatting approach (MPR), projection approach (MIP-MinIP) or Volume Rendering (VR).

The method of the present invention is based on the image blending technique described in the previous section. However, the present invention does not use a global weight factor of the original pixel intensities to obtain the pixel values of the composite image. Instead, it uses a weighting function and information in the datasets of the images that are fused to determine the weight factor locally and dynamically.

In one embodiment of the invention the weighting function for blending a CT image with a MRI image can be set in such a way that for pixel values of the CT image that correspond with bony structure the weight factor is always 1. When going from only the CT image to viewing the blended CT-MRI image the bony structures present in the CT image remain present in the composite blended image.

In another embodiment of the invention the weighting function for blending a CT image with a PET image can be set in such a way that PET pixel values within the range corresponding to the pathology have of a weight factor of 1. When going from only the CT image to viewing the blended CT-PET image only the pathological PET information will appear and remain present in the composite blended CT/PET image.

It is to be understood that the present invention may be implemented in various forms of hardware, software, firmware, special purpose processors or a combination thereof. Preferably, the present invention is implemented in software as a program tangibly embodied on a program storage device. The program may be uploaded to, and executed by a machine comprising any suitable architecture. Preferably the machine is implemented on a computer platform having hardware such as one or more central processing units (CPU), a random access memory (RAM), a graphical processing unit (GPU) and input/output (I/O) interface(s). The computer platform also includes an operating system and microinstruction code. The various processes and functions described herein may either be part of the microinstruction code or part of the program (or combination thereof) which is executed via the operating system. In addition, various other peripheral devices may be connected to the computer platform such as an additional storage device or a printing device.

The computer may be a stand-alone workstation or be linked to the network via a network interface. The network interface may be linked to various types of networks including Local Area Network (LAN), a Wide Area Network (WAN) an intranet, a virtual private network (VPN) and the internet.

Although the examples mentioned in connection with the present invention involve combinations of 3D volumes, it should be appreciated that 4-dimensional (4D) or higher dimensional data could also be used without departing from the spirit and scope of the present invention.

As discussed, this invention is preferably implemented using general purpose computer systems. However the systems and methods of this invention can be implemented using any combination of one or more programmed general purpose computers, programmed micro-processors or micro-controllers, Graphics Processing Units (GPU) and peripheral integrated circuit elements or other integrated circuits, digital signal processors, hardwired electronic or logic circuits such as discrete element circuits, programmable logic devices or the like.

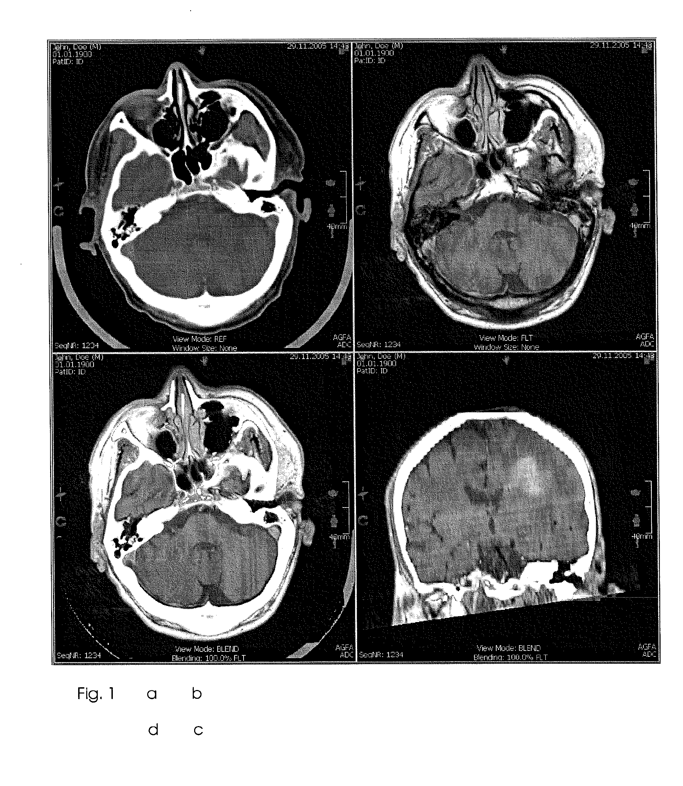

**Claims**

1. A method of fusing at least two volume representations wherein a fused representation is composed by blending the information of datasets corresponding with said volume representations by means of a blending function with a blending weight **characterized in that** the blending weight is adjusted locally and/or dynamically on the basis of said information of either of said datasets.

2. A method according to claim 1 wherein said information comprises raw voxel/pixel values of said datasets.

3. A method according to claim 1 wherein said information of said data sets comprises processed voxel/pixel values of said datasets.

4. A method according to claim 1 wherein said information of said data sets comprises segmentation masks of said datasets.

5. A method according to claim 1 wherein said information of said data sets pertains to extracted features from said datasets.

6. A method according to claim 1 where a reformatter is used to create corresponding planes through both volumes and where a blended plane is composed using a locally and/or dynamically adjusted weight function.

7. A method according to claim 1 where a projector is used to create corresponding projections of both volumes and where a blended projection is composed using a locally and/or dynamically adjusted weight function.

8. A method according to claim 1 where a volume renderer is used to compose a rendered blended volume using a locally and/or dynamically adjusted weight function.

9. A method according to claim 1 where the blending weight is dependent of the voxel/pixel values by means of given thresholds.

10. A method according to claim 1 where the blending weight is 0 (never present in the blended image) for pixels/voxels with values within the given range for one dataset and within the given range for the other dataset.

11. A method according to claim 1 where the blending weight is 1 for pixels/voxels with values within a given range for a first dataset and within a given range for a second dataset.

12. A method according to claim 4 where the blending weight is set to zero for pixels/voxels that belong to a given segmentation mask created for one of the datasets.

13. A method according to claim 4 where the blending weight is set to 1 for pixels/voxels that belong to a given segmentation mask created for one of the datasets.

14. A method according to claim 1 where the weighting function is edited manually.

15. A computer program product adapted to carry out the steps of any of the preceding claims when run on a computer.

16. A computer readable carrier medium comprising computer executable program code adapted to carry out the steps of any of claims 1-14.

Fig. 1    a     b

            d     c

**European Patent Office**

## EUROPEAN SEARCH REPORT

Application Number

EP 07 11 7212

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZUIDERVELD K J ET AL: "MULTI-MODAL VOLUME VISUALIZATION USING OBJECT-ORIENTED METHODS" PROCEEDINGS SYMPOSIUM ON VOLUME VISUALIZATION, 17 October 1994 (1994-10-17), pages 59-66,129, XP008028591 * abstract * * page 61, left-hand column, paragraph 3 - paragraph 7 * | 1-16 | INV. G06T15/50 |
| Y | MANSSOUR I H ET AL: "Visualizing inner structures in multimodal volume data" COMPUTER GRAPHICS AND IMAGE PROCESSING, 2002. PROCEEDINGS. XV BRAZILIAN SYMPOSIUM ON FORTALEZA-CE, BRAZIL 7-10 OCT. 2002, LOS ALAMITOS, CA, USA,IEEE COMPUT. SOC, US, 7 October 2002 (2002-10-07), pages 51-58, XP010624491 ISBN: 0-7695-1846-X * page 51, right-hand column, paragraph 2 * * page 52, right-hand column, last paragraph - page 53, left-hand column, paragraph 2 * * page 54, right-hand column, paragraph 3 * | 1-16 | TECHNICAL FIELDS SEARCHED (IPC) G06T |
| Y | EP 1 489 591 A (MICROSOFT CORP [US]) 22 December 2004 (2004-12-22) * abstract * * paragraphs [0011], [0016] * | 1-16 | |

-/--

The present search report has been drawn up for all claims

| Place of search | Date of completion of the search | Examiner |
|---|---|---|
| Munich | 12 November 2007 | PIERFEDERICI, A |

EPO FORM 1503 03.82 (P04C01)

**European Patent Office**

# EUROPEAN SEARCH REPORT

Application Number

EP 07 11 7212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KINDLMANN G ET AL: "Semi-automatic generation of transfer functions for direct volume rendering" VOLUME VISUALIZATION, 1998. IEEE SYMPOSIUM ON RESEARCH TRIANGLE PARK, NC, USA 19-20 OCT. 1998, NEW YORK, NY, USA,IEEE, US, 19 October 1998 (1998-10-19), pages 79-86,170, XP010313221 ISBN: 0-8186-9180-8 ----- | | |
| A | RASKAR R ET AL: "Blending multiple views" COMPUTER GRAPHICS AND APPLICATIONS, 2002. PROCEEDINGS. 10TH PACIFIC CONFERENCE ON BEIJING, CHINA 9-11 OCT. 2002, LOS ALAMITOS, CA, USA,IEEE COMPUT. SOC, US, 9 October 2002 (2002-10-09), pages 145-153, XP010624898 ISBN: 0-7695-1784-6 ----- | | |
| A | BERCIER Y ET AL: "Multimodality image fusion for radiosurgery localisation of large AVMs" PROCEEDINGS OF THE 22ND ANNUAL INTERNATIONAL CONFERENCE OF THE IEEE ENGINEERING IN MEDICINE AND BIOLOGY SOCIETY (CAT. NO.00CH37143) IEEE PISCATAWAY, NJ, USA, vol. 4, 2000, pages 2689-2692 vol., XP010531182 ISBN: 0-7803-6465-1 ----- | | **TECHNICAL FIELDS SEARCHED (IPC)** |

The present search report has been drawn up for all claims

| Place of search | Date of completion of the search | Examiner |
|---|---|---|
| Munich | 12 November 2007 | PIERFEDERICI, A |

EPO FORM 1503 03.82 (P04C01)

**ANNEX TO THE EUROPEAN SEARCH REPORT**
**ON EUROPEAN PATENT APPLICATION NO.**
EP 07 11 7212

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2007

| Patent document cited in search report | Publication date | Patent family member(s) | Publication date |
|---|---|---|---|
| EP 1489591 A | 22-12-2004 | CN 1704883 A<br>JP 2005135371 A | 07-12-2005<br>26-05-2005 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1489591 A

**Non-patent literature cited in the description**

- **ZUIDERVELD ; VIERGEVER.** Multi-modal Volume Visualization using Object-Oriented Methods. *Proceedings Symposium on Volume Visualization,* 17 October 1994

- **MANSSOUR I H et al.** Visualizing inner structures in multimodal volume data. *Computer Graphics and Image Processing,* 2002